# EUROPEAN PATENT APPLICATION

(11) **EP 1 347 626 A2**
(43) Date of publication of application: **24.09.2003**
(21) Application number: 02259040.0
(22) Date of filing: 31.12.2002
(51) Int. Cl.: H04M 7/00, H04M 3/487, H04Q 7/38

(54) **A system and method for seamless audio retrieval and transmittal during wireless application protocol sessions**

(30) Priority: 22.03.2002 US 104791
(71) Applicant: Openwave Systems Inc., Redwood City, CA 94063 (US)
(72) Inventor: Stein, Lawrence M., San Carlos, California 94070 (US); Nobrega, Ryan, Belmont, California 94002 (US)
(74) Representative: W.P. Thompson & Co.

(57) **Abstract**

A system and method is disclosed for a system and method for seamless audio retrieval and transminal during wireless application protocol sessions. In one embodiment, the method comprises receiving an audio data selection during a visual internet session on a processing device. Information associated with audio data associated with the audio data selection and the processing device is stored on a state server. The visual internet session is terminated and an audio session via a voice gateway is initiated. Using the information, the audio data is retrieved from an origin server.

## Description

### BACKGROUND OF THE INVENTION

### Field of the Invention

The present invention relates generally to the field of wireless communication networks. More particularly, the invention relates to a system and method for seamless audio retrieval and transmittal during wireless application protocol sessions.

### Description of the Related Art

The emergence of wireless cellular phone technology, as well as advances in portable computing now allow wireless access to the Internet. The computer functionality is integrated into the cellular phone handset, thereby providing the cellular phone with the ability to browse and display wireless markup language (WML) or hypertext device markup language web pages. The wireless capabilities of the cellular phone are used to access the Internet.

The Wireless Application Protocol (WAP) is a standard developed for wireless internet access on cellular telephones, and other wireless terminals. The internet is a worldwide network linking computers from educational institutions, the military, government agencies, and businesses and has been dubbed the "Information Superhighway". In addition to email and displaying data and graphics, recent advances allow for the transfer of audio signals, such as voice transmissions, over the internet. Such voice transmissions can include voice messages, music, news reports, audio stock updates, and other similar audio data signals.

Text and graphic files on the internet may have associated audio data signals. The audio data may be .mp3 files, .wav files or similar audio formats. The individual files may have an associated Uniform Resource Locator ("URL").

However, wherein the user accesses the internet using a WAP session, the audio data cannot be transferred because WAP, as of the date of application, does not include specifications for the transfer of audio data. Accordingly, while aware of audio data during a WAP session, the subscriber must terminate the WAP session, and call the messaging system to listen to the audio. After completing the call, the user must often provide identification information, such as a userid and password. After identifying themselves, the user must then listen to a menu of choices to hear the audio. Upon completion of the retrieval of the audio data, the user must then reestablish the WAP session. The foregoing requires a considerable amount of user interaction. One known system allows for the retrieval of voice messages.

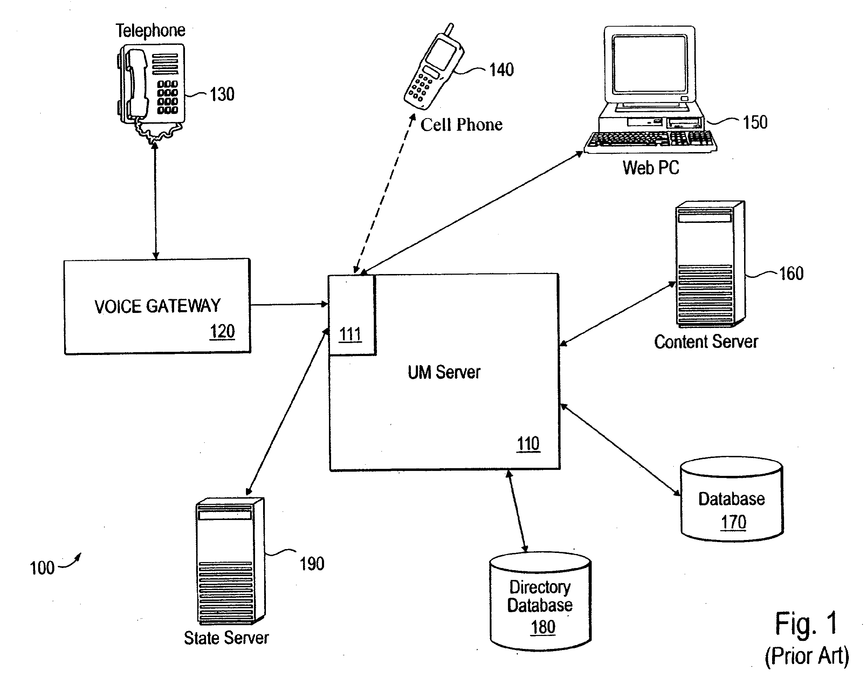

**Figure 1** illustrates a block diagram of a known system 100 for the seamless voice message retrieval and transmittal during wireless application protocol sessions. System 100 allows for an e-mail service to be provided to WAP device 140. Recorded voice mail messages are stored in database 170. System 100 allows voice mail messages to be played through universal messaging (UM) Server 110 and voice gateway 120 to an analog phone requested by subscriber. However, system 100 is limited to the retrieval of voice messages.

### BRIEF DESCRIPTION OF THE DRAWINGS

The accompanying drawings, which are included as part of the present specification, illustrate the presently preferred embodiment of the present invention and together with the general description given above and the detailed description of the preferred embodiment given below serve to explain and teach the principles of the present invention:

**Figure 1** illustrates a block diagram of a known system for the seamless voice message Retrieval and Transmittal During Wireless Application Protocol Session;

**Figure 2** illustrates a block diagram of an exemplary system for the seamless audio retrieval and transmittal during wireless application protocol sessions;

**Figure 3** illustrates an exemplary block diagram of a portal;

**Figure 4** illustrates an exemplary computer architecture used to implement elements of one embodiment; and

**Figure 5** illustrates an exemplary flow diagram for the seamless audio retrieval and transmittal during wireless application protocol (WAP) sessions.

### DETAILED DESCRIPTION

A system and method is disclosed for Seamless Audio Retrieval and Transmittal During Wireless Application Protocol Sessions. In one embodiment, the method comprises receiving an audio data selection during a visual internet session on a processing device. Information associated with audio data associated with the audio data selection and the processing device is stored on a state server. The graphical or visual internet session is terminated and an audio session via a voice gateway is initiated. Using the information, the audio data is retrieved from an origin server..

In the following description, for purposes of explanation, specific nomenclature is set forth to provide a thorough understanding of the present invention. However, it will be apparent to one skilled in the art that these specific details are not required in order to practice the present invention. For example, the present invention has been described with reference to audio data. However, the same techniques can easily be applied to other types of data, such as video of mixed audio and video.

The present invention also relates to apparatus for performing the operations described herein. This apparatus may be specially constructed for the required purposes, or it may comprise a general-purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions, and each coupled to a computer system bus.

The algorithms and displays presented herein are not inherently related to any particular computer or other apparatus. Various general-purpose systems may be used with programs in accordance with the teachings herein, or it may prove convenient to construct more specialized apparatus to perform the required method steps. The required structure for a variety of these systems will appear from the description below. In addition, the present invention is not described with reference to any particular programming language. It will be appreciated that a variety of programming languages may be used to implement the teachings of the invention as described herein.

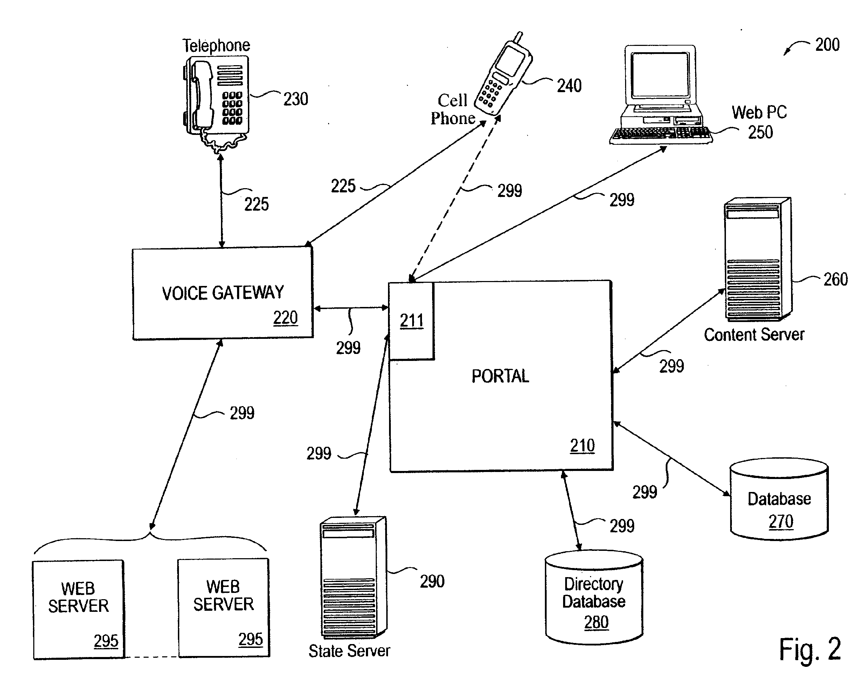

Elements of the present invention may be included within a seamless audio retrieval and transmittal system 200 such as that illustrated in **Figure 2**. **Figure 2** illustrates a block diagram of an exemplary system for the seamless audio retrieval and transmittal during wireless application protocol sessions.

In general, the wired network side architecture of the present invention can be implemented as a standard telephone connection provided through an Internet service provider to enable data communication on the Internet over a conventional telephone network. This use of the Internet as a distribution network is well known to those of ordinary skill in the art. In an alternate embodiment having cable modem capability, communication over a conventional cable network is possible in lieu of communication over the telephone network. The cable network is typically much faster (i.e. provides a much greater bandwidth) than the standard telephone network; however, cable modems are typically more expensive than standard POTS (plain old telephone system) modems. In another alternate embodiment having conventional Digital Subscriber Line (DSL) capability, the network 299 is accessed using a DSL modem. Again, the DSL network is typically faster than the POTS network; however, access to a DSL network is generally more expensive. Cable modems and DSL implementations are alternative communications media to the POTS implementation.

In one embodiment, network 299 may be an internet protocol (IP) network which often utilizes Ethernet interfaces. The protocol utilized over network 299 is HyperText Transport Protocol (HTTP) using Transmission Control Protocol/Internet Protocol (TCP/IP), The format of the data carried over network 299 varies depending on the device. Examples include Voice Extensible Markup Language (VXML) which is sent to Voice Gateway 220, WML which is sent to Cell Phone 299, and HTML which is sent to Web PC 250.

The wireless architecture of the present invention may be implemented using numerous types of networks. Examples of wireless networks upon within which the present invention may be implemented are Global System for Mobile Communications (GSM), Code Division Multiple Access (CDMA), Time Division Multiple Access (TDMA), Cellular Digital Packet Data (CDPD), Integrated Digital Enhanced Network (iDEN), etc.

The databases of system 200 in one embodiment run an instance of a Relational Database Management System (RDBMS), such as Microsoft™ SQL-Server, Oracle™ or the like.

Note that any or all of the components of the system illustrated in **Figure 1** and associated hardware may be used in various embodiments of the present invention; however, it will be appreciated by those of ordinary skill in the art that other configurations of the system may be used within the spirit and scope of the present inventive method and system.

**Figure 2** illustrates a block diagram of an exemplary system 200 for seamless audio retrieval and transmittal during wireless application protocol sessions. System 200 includes multiple points of access. For example, a subscriber may use telephone 230, cellular telephone 240, or Web PC 250. Cellular phone 240 and web PC 250 may communicate directly to portal 210 through portal interface 211. Analog telephone 230 accesses portal 210 via a voice gateway 220. Cellular phone 240 is a WAP enabled phone. Although cell phone 240 and telephone 230 are shown separate, they may be integrated.

Voice gateway 220 relays high quality voice and fax traffic across a network 299. For example, voice gateway 220 may be an AS53001 Voice Gateway manufactured by Cisco Technologies of San Jose, California, or any similar gateway. Voice gateway 220 provides an interface between telephony protocols and internet protocols. For example, gateway 220 may:
- answer a phone call from telephone 230 and invoke an initial VXML application;
- determine if the phone call is a fax or voice call (and route the call appropriately:
- pass caller information to the VXML application (e.g. caller id, dialed number, or redirected number);
- translate a user's dual tone multifrequency (DTMF) key selections into VXML requests; and
- convert audio files returned by the VXML application into the appropriate format to be played back through the telephone.

Network 225 connects telephony devices, such as telephone 230 and cell phone 240 to voice gateway 220. In one embodiment, network 225 is a T1/Signaling System 7 (T1/SS7) network. In alternate embodiments, E1/SS7, Integrated Services Digital Network/Primary Rate Interface (ISDN/PRI), and Voice Over Internet Protocol/Session Initiation Protocol (VOCP/SIP) are used. Thus, gateway 220 includes a telephony interface to receive and transmit data to the telephony devices, as well as a TCP/IP interface to communicate with portal 210, web servers 295 and the other elements of system 200.

Web Servers 295 are origin servers that are connected to voice gateway 220 and provide audio content to a subscriber. The audio content may be any audio file, for example an MP3 or WAV. The content of the audio data may be a news report, weather report, music or similar audio data.

In one embodiment, content server 260 is a telephony server, which controls access to database 270 that stores voice messages and related information for subscribers. Database 270 may also store other audio data associated with content served by content server 260.

Directory database 280 provides subscriber information that relates subscribers with phone numbers, IP addresses, and WAP identities. Each subscriber can be associated with a particular phone number. When a subscriber calls into voice gateway 220 from telephone 230, voice gateway 220 obtains the subscriber's phone number using caller identification technology.

State server 290 stores information identifying the particular audio to be played by voice gateway 220. In one embodiment, state server 290 stores name/value pairs where a subscriber is associated with the pair. The name/value pair may include a Uniform Resource Locator ("URL") to audio data stored on web servers 295. In an alternate embodiment, state server 290, stores name/value pairs identifying audio data stored on content server 260.

Portal 210 includes an interface 211 for communicating with cell phone 240 and web PC 250, as well as voice gateway 220. Portal 210 is a computer system which allows subscribers to view the information stored for a particular subscriber (e.g. News, weather, stocks quotes, etc.). Portal 210 may query directory database to link a phone number with a subscriber or WAP identity or an IP address. Portal 210 receives content from content server 260, including visual content served to cellular phone 240, and audio data to telephone 230. Portal 210 queries state server 290 to determine what audio from content server 260 to provide to the subscriber. However, if the audio data is on web server 295, portal 210 receives a URL from state server 290. Portal 210 wraps the URL into a VXML document. The VXML document is provided by portal 210 to voice gateway 220. Voice gateway 220 executes the VXML page and retrieves the audio data from web servers 295 and provides the audio data to telephone 230.

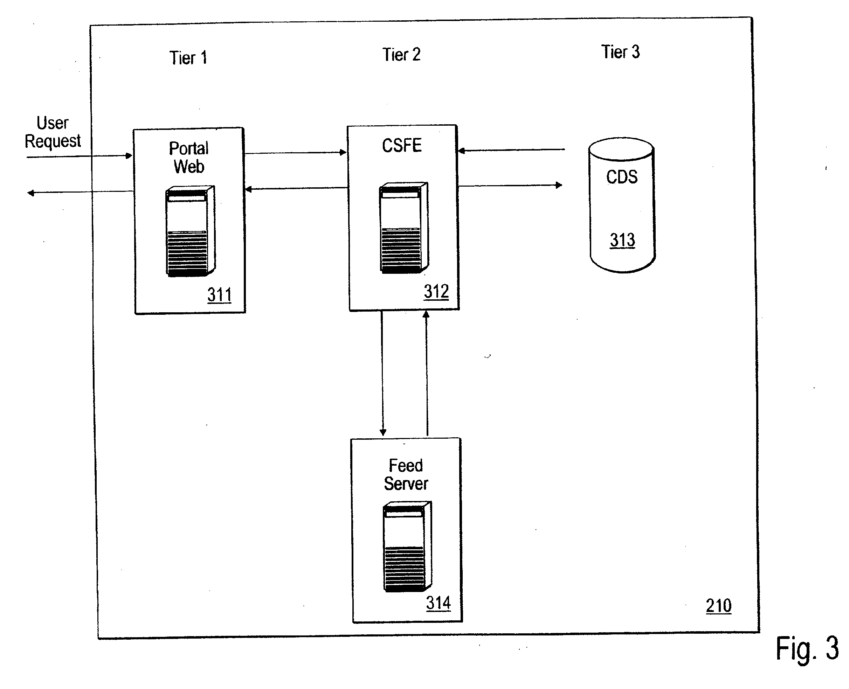

**Figure 3** illustrates an exemplary block diagram of a portal 210. Portal 210 includes a Portal Web 311 for connecting to network 299 and gateway 220. Connected to Portal Web 311 is the Content Server Front End (CSFE) 312. It is the 2^{nd} tier in the three tier architecture of **Figure 3**. CSFE 312 is connected to Content Data Store (CDS) 313. In one embodiment, CDS 313 may be database 270 and store audio and visual content for provided to portal web 311. CSFE 312 provides a network interface to the portal web 311 so that the portal web 311 may fetch data from CDS 313 without having a direct connection to CDS 313 itself. This helps provide network security (i.e. only CSFE 312 may talk to CDS 313). It also helps performance since the CSFE 312 may cache some of the data. CSFE 312 is an optimization for scalability. In yet another embodiment, CSFE 312 may be integrated in the portal web 311 which would collapse the architecture into two tiers instead of three.

Also included in portal 210 is feed server 314. The feed server polls data from the content server 260 and stores the resulting data in CDS 313.. Feed server 314 pulls raw data from content server 260, formats it for the appropriate devices (WML, VXML, HTML, etc.) and stores the result in CDS 313.

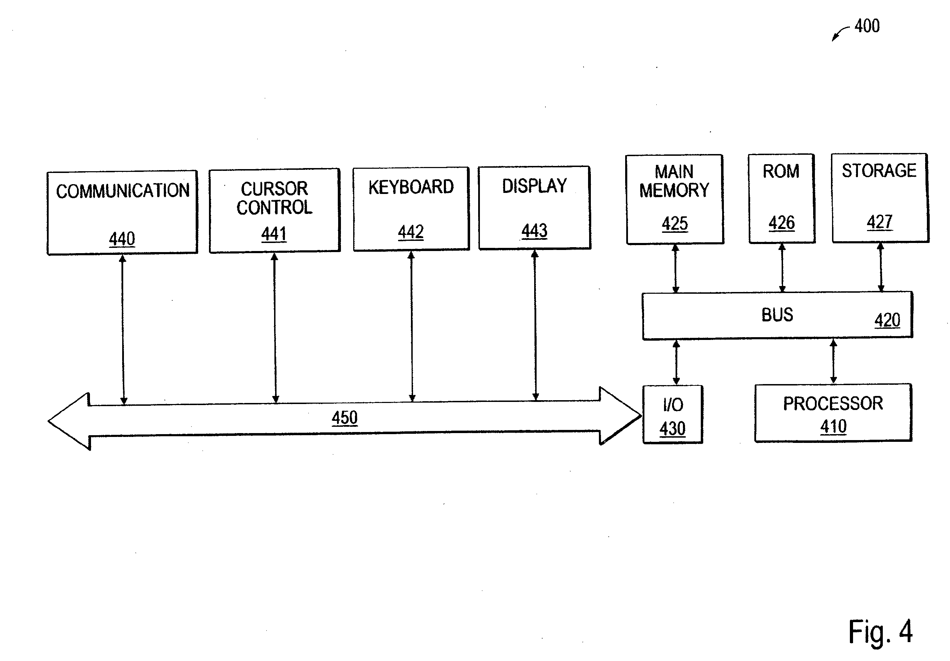

Having briefly described an exemplary network architecture which employs various elements of the present invention, a computer system 400 in which elements of the present invention may be implemented will now be described with reference to **Figure 4**. Computer system 400 may be implemented within web PC 250. Cell Phone 240, Content Server 260, State Server 290, Web Server 295, and portal 210.

One embodiment of computer system 400 comprises a system bus 420 for communicating information, and a processor 410 coupled to bus 420 for processing information. Computer system 400 further comprises a random access memory (RAM) or other dynamic storage device 425 (referred to herein as main memory), coupled to bus 420 for storing information and instructions to be executed by processor 410. Main memory 425 also may be used for storing temporary variables or other intermediate information during execution of instructions by processor 410. Computer system 400 also may include a read only memory (ROM) and/or other static storage device 426 coupled to bus 420 for storing static information and instructions used by processor 410.

A data storage device 427 such as a magnetic disk or optical disc and its corresponding drive may also be coupled to computer system 400 for storing information and instructions. Computer system 400 can also be coupled to a second I/O bus 450 via an I/O interface 430. A plurality of I/O devices may be coupled to I/O bus 450, including a display device 443, an input device (e.g., an alphanumeric input device 442 and/or a pointing device 441). For example, video news clips and related information may be presented to the user on the display device 443.

The communication device 440 is for accessing other computers (servers or clients) via a system. The communication device 440 may comprise a modem, a network interface card, or other well-known interface device, such as those used for coupling to Ethernet, token ring, or other types of networks.

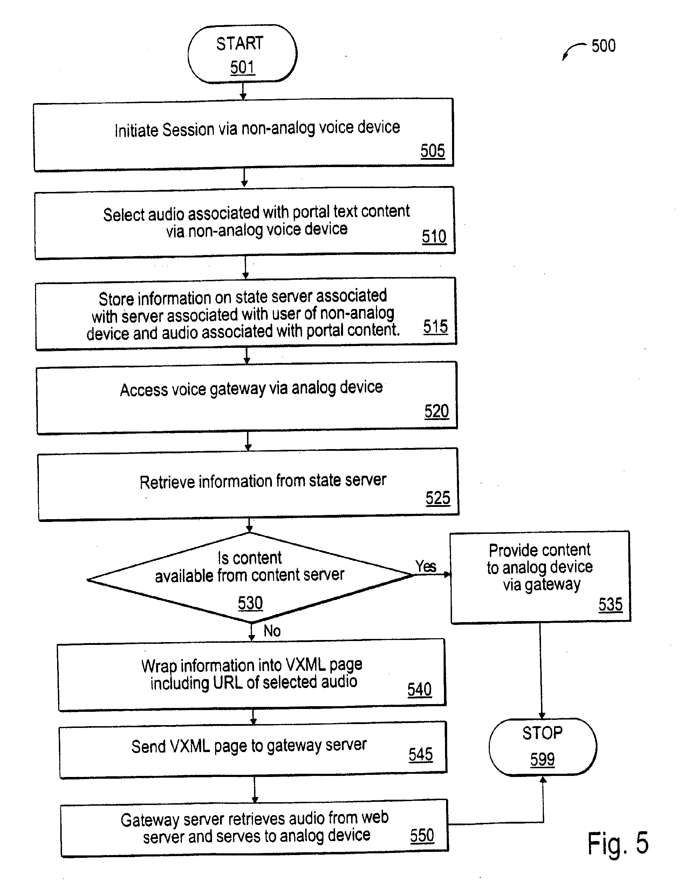

**Figure 5** illustrates an exemplary flow diagram 500 for the seamless audio retrieval and transmittal during wireless application protocol (WAP) sessions. The process begins at block 501. Flow continues to processing block 505 where a WAP session is commenced. The WAP session may occur on a WAP enabled device such as cellular phone 240 or web PC 250. A subscriber may browse news stories, stock reports or similar web content. The web content may also be portal text content - that is content provided to the WAP device from portal 210 that is stored in database 220 and served by content server 260. At processing block 510, the subscriber may select to hear audio associated with content being browsed. The subscriber's selection initiates a request to the portal 210 for the audio data. Also transferred with the request is the telephone number of the WAP device that the subscriber is currently using. Although the audio may not necessarily be served by content server 260, the audio may also be served by web servers 295.

Flow continues to processing block 515, where state information is stored by portal 210 on state server 290. The state information associates the location of audio data with the request for the audio selected by the subscriber in processing block 510. The audio data is associated with the content viewed by the subscriber on the WAP device. Furthermore the audio data is associated with the subscriber by the subscriber's phone number. The URL to the audio data is stored in state server 290 which will later be retrieved by portal 210. In embodiments involving WAP, portal 210 returns a WAP deck to the subscriber's phone that contains a URL containing a phone number to the voice gateway 220. The WAP deck instructs the WAP device (i.e., cell phone 240) to make a voice call to the voice gateway 220. The WAP deck contains a phone number to the voice gateway 220. As is shown in the following example, this phone number is embedded in a wtai URL. In one embodiment of the present invention, the WAP deck may be the following:

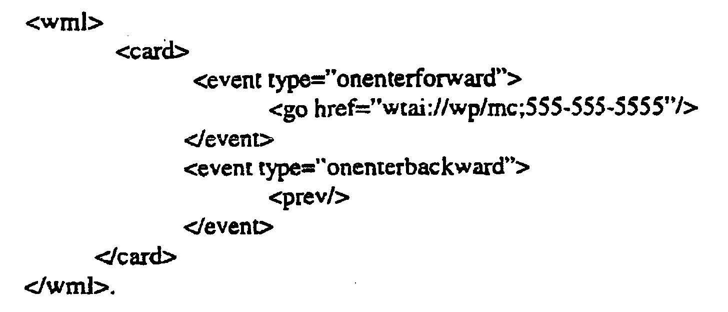

At processing block 520, the WAP session is closed and a audio session is commenced. In one embodiment of the present invention, this occurs when the WAP client (i.e., cell phone 240) receives the deck and invokes the URL "wp/mc;555-555-5555" above which causes the phone number 555-555-5555 to be dialed. Thus, the audio session may occur on a separate analog phone 230 or on the same WAP enabled cellular phone 240. In another embodiment, web PC 250 is configured with voice over internet protocol (VoIP) and voice gateway 220 maybe accessed that way. Once a voice call is initiated via voice gateway 220, gateway 220 may obtain the phone number of the device accessing the gateway 220, using caller identification (ID) Technology. If the callerID is not present, gateway 220 prompts the user. The subscriber's phone number is provided to portal 210 which queries directory database to determine the WAP identity associated with the subscriber. At processing block 525, the WAP identity is then used by portal 210 to query state server 290. State server 290 provides portal 210 with the name/value pair associated with the WAP identity The name/value pair provides information as to whether the desired audio data is available through content server 260, or through web servers 295. The data stored by the WAP session in block 515 is retrieved during the voice session in processing block 525.

Flow continues to decision block 530 where portal 210 determines if the audio content is available from content server 260. If content server 260 can serve the audio data, flow is passed to processing block 535. At processing block 535, the audio content is provided from data store 270 to gateway 220, which provides the audio to the requesting device via portal 270. An URL used in processing block 535 instructs the portal to play the audio from data store 270. Flow then passes to block 599 where the process ends.

If the audio data is not available though content server 260, flow passes to processing block 540. Portal 210 had received the name/value pair from state server 290 at processing block 525, which contains a URL for the audio data available through web servers 295. At processing block 540, portal 210 wraps the URL into a voice extensible markup language (VXML) page. In one embodiment of the present invention, the VXML page may be the following:

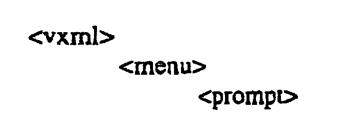

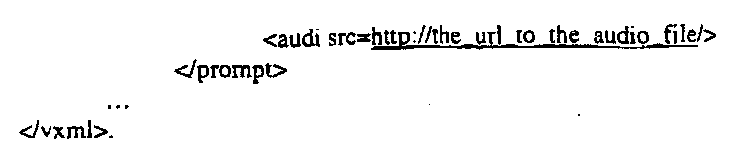

Portal 210 serves the VXML page to voice gateway 220 at processing block 545. Flow continues to processing block 550 where voice gateway server 220 retrieves the audio data from web servers 295 and serves the data to the requesting device. When the subscriber hangs up the voice call, the WAP client (i.e., cell phone 240) may return to the last WAP deck it was viewing, thus returning the subscriber to the last WML page the subscriber was viewing prior to commencing process 500. The process ends at block 599.

A system and method for seamless audio retrieval and transmittal during a wireless application protocol session is disclosed. Although the present invention has been described with respect to specific examples and subsystems, it will be apparent to those of ordinary skill in the art that the invention is not limited to these specific examples or subsystems but extends to other embodiments as well. The present invention includes all of these other embodiments as specified in the claims that follow.

## Claims

1. A method comprising:
receiving an audio data selection during a visual internet session on a processing device;
storing information associated with audio data associated with the audio data selection and the processing device on a state server;
terminating the visual internet session;
initiating an audio session via a voice gateway; and
using the information to retrieve the audio data from an origin server.

2. The method of claim 1, wherein using the information comprises:
querying a directory database to determine a user identification;
retrieving state information from a state server using the user identification; determining if the audio data is available on a content server;
determining if the audio data is available on an origin server;
generating a VXML page including a URL for the audio data; and
providing the VXML page to a gateway server.

3. The method of claim 1, wherein the visual internet session is a WAP session.

4. The method of claim 1, wherein the processing device is a WAP device.

5. The method of claim 1, wherein the information includes a URL associated with the audio data and a telephone number associated with the processing device.

6. The method of claim 1, wherein the audio session is initiated by the processing device.

7. The method of claim 1, wherein receiving the audio data selection comprises: generating a request to a portal for the audio data.

8. The method of claim 1, wherein terminating the visual internet session comprises:
generating a WAP deck in the portal including a phone number and URL; and
providing the WAP deck to the processing device.

9. The method of claim 1, wherein initiating an audio session comprises:
obtaining a phone number of a subscriber initiating the audio session.

10. A system comprising:
means for receiving an audio data selection during a visual internet session on a processing device;
means for storing information associated with the audio and the processing device on a state server,
means for terminating the visual internet session;
means for initiating an audio session via a voice gateway; and
means for using the information to retrieve audio data associated with the audio data selection from an origin server.

11. The system of claim 10, wherein the means for using the information comprises:
means for querying a directory database to determine a user identification;
means for retrieving state information from a state server using the user identification;
means for determining if the audio data is available on a content server;
means for determining if the audio data is available on an origin server;
means for generating a VXML page including a URL for the audio data; and
means for providing the VXML page to a gateway server.

12. The system of claim 10, wherein the visual internet session is a WAP session.

13. The system of claim 10, wherein the processing device is a WAP device.

14. The system of claim 10, wherein the information includes a URL associated with the audio data and a telephone number associated with the processing device.

15. The system of claim 10, wherein the audio session is initiated by the processing device.

16. The system of claim 10, wherein the means for receiving the audio data selection comprises means for generating a request to a portal for the audio data.

17. The system of claim 10, wherein the means for terminating the visual internet session comprises:
means for generating a WAP deck in the portal including a phone number and URL; and
means for providing the WAP deck to the processing device.

18. The system of claim 10, wherein the means for initiating an audio session comprises:
means for obtaining a phone number of a subscriber initiating the audio session.

19. A computer program product comprising a plurality of instructions, or a machine-readable medium having stored thereon a plurality of instructions, said plurality of instructions when executed by a machine, cause said machine to perform a process comprising:
receiving an audio data selection during a visual internet session on a processing device;
storing information associated with the audio and the processing device on a state server;
terminating the visual internet session;
initiating an audio session via a voice gateway; and
using the information to retrieve audio data associated with the audio data selection from an origin server.

20. The computer-readable medium of claim 19 having stored thereon additional instructions, said additional instructions when executed by a computer for using the information, cause said computer to further perform:
querying a directory database to determine a user identification;
retrieving state information from a state server using the user identification;
determining if the audio data is available on a content server;
determining if the audio data is available on an origin server;
generating a VXML page including a URL for the audio data; and
providing the VXML page to a gateway server.

21. The computer-readable medium of claim 19, wherein the visual internet session is a WAP session.

22. The computer-readable medium of claim 19, wherein the processing device is a WAP device.

23. The computer-readable medium of claim 19, wherein the information includes a URL associated with the audio data and a telephone number associated with the processing device.

24. The computer-readable medium of claim 19, wherein the audio session is initiated by the processing device.

25. The computer-readable medium of claim 19 having stored thereon additional instructions, said additional instructions when executed by a computer for receiving the audio data selection, cause said computer to further perform generating a request to a portal for the audio data.

26. The computer-readable medium of claim 19 having stored thereon additional instructions, said additional instructions when executed by a computer for terminating the visual internet session, cause said computer to further perform:
generating a WAP deck in the portal including a phone number and URL; and
providing the WAP deck to the processing device.

27. The computer-readable medium of claim 19 having stored thereon additional instructions, said additional instructions when executed by a computer for initiating an audio session, cause said computer to further perform:
obtaining a phone number of a subscriber initiating the audio session.

28. A system comprising:
a portal;
a voice gateway connected to the portal; and
a state server connected to the portal,
wherein the portal receives an audio data selection during a visual internet session on a processing device; stores information associated with audio data associated with the audio data selection; and
wherein the gateway uses the information to retrieve the audio data associated with the audio data selection from an origin server and provide the audio data to the processing device.

29. The system of claim 28, wherein the portal:
queries a directory database to determine a user identification;
retrieves state information from a state server using the user identification;
determines if the audio data is available on a content server;
determines if the audio data is available on an origin server;
generates a VXML page including a URL for the audio data; and
provides the VXML page to a gateway server.

30. The system of claim 29, wherein the visual internet session is a WAP session.

31. The system of claim 29, further comprising a processing device connected to the portal that is a WAP device.

32. The system of claim 29, wherein the information includes a URL associated with the audio data and a telephone number.

33. The method of claim 29, wherein the portal generates a WAP deck in the including a phone number and URL; and provides the WAP deck to a processing device.

34. A WAP portal, comprising:
a processor;
a bus connected to the processor;
a memory connected to the bus, wherein the memory stores instructions when executed by the processor, cause the processor to receive an audio data selection during a visual internet session on a processing device; store information associated with audio data associated with the audio data selection; query a directory database to determine a user identification; retrieve state information from a state server using the user identification; determine if the audio data is available on a content server; determine if the audio data is available on an origin server; generate a VXML page including a URL for the audio data; and provide the VXML page to a gateway server.

35. A method for providing audio content to a cell phone, comprising
receiving an audio data selection during a WAP session on the cell phone;
storing information associated with audio data associated with the audio data selection and the cell phone on a state server;
terminating the WAP session;
initiating an audio session via a voice gateway;
using the information to retrieve the audio data from an origin server;
querying a directory database to determine a user identification;
retrieving state information from a state server using the user identification;
determining if the audio data is available on a content server;
determining if the audio data is available on an origin server,
generating a VXML page including a URL for the audio data; and
providing the VXML page to a gateway server.
